# EUROPEAN PATENT SPECIFICATION

(11) **EP 4 529 500 B1**
(45) Date of publication and mention of the grant of the patent: **06.05.2026**
(21) Application number: 23736821.2
(22) Date of filing: 23.05.2023
(51) Int. Cl.: B23K 9/095, B23K 9/10, B23K 9/167, B23K 9/173

(54) **WELDING POWER SOURCE, WELDING SYSTEM WITH SUCH WELDING POWER SOURCE, DC-AC SELECTOR STAGE AND METHOD OF CONTROLLING A WELDING POWER SOURCE**
SCHWEISSSTROMQUELLE, SCHWEISSSYSTEM MIT EINER SOLCHEN SCHWEISSSTROMQUELLE, GLEICHSTROM-WECHSELSTROM-SCHALTSTUFE UND VERFAHREN ZUR STEUERUNG EINER SCHWEISSSTROMQUELLE
SOURCE D'ALIMENTATION DE SOUDAGE, SYSTÈME DE SOUDAGE DOTÉ D'UNE TELLE SOURCE D'ALIMENTATION DE SOUDAGE, ÉTAGE DE SÉLECTION CC-CA ET PROCÉDÉ DE COMMANDE D'UNE SOURCE D'ALIMENTATION DE SOUDAGE

(30) Priority: 23.05.2022 IN 202241029505
(43) Date of publication of application: 02.04.2025
(73) Proprietor: ESAB AB, 402 77 Gothenburg (SE)
(72) Inventor: N, Thilak Raj, Coimbatore, 641024 (IN); NATARAJAN, Govindaraj, Chennai, 600048 (IN); SHANMUGAM, Paramasivam, Chennai, 600078 (IN); PULENDIRAN, Sathish, Chennai, 600056 (IN)
(74) Representative: Murgitroyd & Company
(86) International application number: PCT/IB2023/055307
(87) International publication number: WO 2023/228089

(56) References cited:
- CN-A- 111 371 444
- US-A- 6 111 216
- US-A1- 2005 006 367
- US-A1- 2019 126 380

## Description

The present invention relates to a welding power source capable of delivering both DC and AC weld power for welding operations, in particular a welding power source having circuitry for bypassing components of an AC power stage during DC welding operation, and more particularly to a welding power source, a welding system with such power source, a DC-AC selector stage for a welding power source, and a method of controlling a welding power source, see claims 1, 11, 12 and 14 (US 2005/006367 A1 describing the preamble of claims 1, and 14).

### BACKGROUND

Welding power sources typically generate output weld power for a welding or cutting process by converting input alternating-current (AC) power from AC mains or a generator to direct-current (DC) power, and then converting the DC power to output power suitable for the welding or cutting process via a weld process regulator. The output power required for many welding operations is DC power. AC weld power can also be used in certain types of welding operations such as, for example, in tungsten inert gas (TIG) welding, where the electric welding arc is formed between a non-consumable tungsten electrode and the workpiece. While DC power may be preferable in some TIG welding operations, such as when welding certain types of steel, AC TIG weld power is more typically used to weld aluminum. Further, manual ignition of the welding arc, e.g., via a "scratch start," is difficult to achieve in TIG welding. More advance welding power sources often include circuitry to generate high-frequency (HF) AC power that can be used to initiate the welding arc in TIG welding without touching the electrode to the workpiece, thereby significantly simplifying arc ignition. However, inclusion of circuitry to generate AC power for TIG operations can potentially introduce power losses that impact the power efficiency of the welding power source during DC welding operations.

### INVENTION

According to a first aspect of the present invention, a welding power source is defined in claim 1.

According to a second aspect of the present invention, a welding system with such welding power source is defined in claim 11.

According to a third aspect of the present invention, a DC-AC selector stage for a welding power source is defined in claim 12.

According to a fourth aspect of the present invention, a method of controlling a welding power source is defined in claim 14.

Further preferred embodiments of these four aspects of the present invention are defined in their dependent claims.

### BRIEF DESCRIPTION OF THE DRAWINGS

FIG. 1 is an illustration of an example welding system in which the techniques and circuitry described herein may be implemented.
FIG. 2 is a high-level block diagram of a welding power source capable of delivering both DC and AC weld power for welding operations.
FIG. 3 is a circuit diagram of an inverter-based DC-AC selector stage in a welding power source operable in a DC weld power mode and in an AC weld power mode.
FIG. 4 is a circuit diagram of an example implementation of an inverter-based DC-AC selector stage in a welding power source, including DC bypass circuitry and operable in a DC weld power mode and in an AC weld power mode.
FIG. 5 is a flow diagram showing operations for selecting an AC power mode and a DC power mode by controlling components of the DC-AC selector stage.

### DETAILED DESCRIPTION

### Overview

A welding power source comprises a DC-AC selector stage configurable to supply either DC weld power or AC weld power to output power terminals of the welding power source. The DC-AC selector stage comprises a first switch element including a first switch and a first relay arranged in parallel, and a second switch element including a second switch and a second relay arranged in parallel. A weld controller controls the first and second switches and the first and second relays to select a DC power mode in which the DC weld power passes through the DC-AC selector stage to the output power terminals and to select an AC power mode in which DC weld power is converted to AC weld power and supplied to the output power terminals.

### Example Implementations

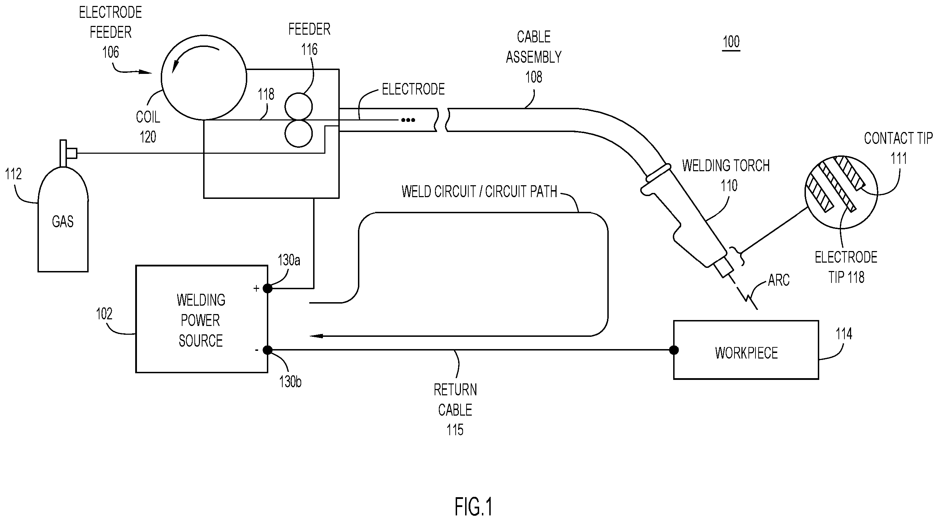

An example welding system 100 suitable for implementing the techniques and circuitry described herein is shown in the high-level functional block diagram of FIG. 1. Welding system 100 includes: a welding power source 102; a wire electrode feeder 106 coupled to the welding power source 102; a cable assembly 108 coupled to the wire electrode feeder 106; a torch 110 coupled to the cable assembly 108 and having a metal contact tip 111 that extends from an end of the torch 110; and a gas supply 112 (e.g., a gas container) coupled to the cable assembly 108 to supply shielding gas. A workpiece 114 is coupled to the welding power source 102 through at least a return path/cable 115.

In this example, because welding system 100 includes a wire electrode feeder 106 and a gas supply 112, the system is capable of performing Gas Metal Arc Welding (GMAW), such as Metal Inert Gas (MIG) and Metal Active Gas (MAG) welding in at least some modes of operation. In general, welding system 100 can have any suitable configuration for performing a variety of different types of welding operations. As used herein the terms "weld" and "welding" refer to any of a wide range of arc welding and plasma cutting systems including but not limited to GMAW (MIG/MAG) welding, tungsten inert gas (TIG) welding, flux cored arc welding (FCAW), shielded metal arc welding (SMAW), also known as Manual Metal Arc (MMA) welding or "stick" welding, and submerged arc welding (SAW) systems. In the context of arc welding, torch 110 may be referred to as a "welding torch" or "welding gun." In the context of plasma cutting, torch 110 may be referred to as a "cutting torch." Thus, as used herein, the term "torch" means either a welding torch (or welding gun) or a cutting torch, depending on context. In the case of TIG welding, the electrode is not a consumable wire, and a wire electrode feeder is not required. In the case of MMA welding, neither the wire electrode feeder nor a gas supply for providing shielding gas is required. In at least one mode of operation, welding power source 102 is designed to deliver DC power to a welding operation, and in at least one mode of operation, welding power source 102 is designed to deliver AC power to a welding operation.

Wire electrode feeder 106 includes a feeder 116 to feed a consumable electrode from a coiled wire electrode 120 through cable assembly 108 and through contact tip 111 of torch 110, which is in electrical contact with the electrode. Welding power source 102 generates weld power at "positive" and "negative" terminals 130a, 103b (e.g., on a front panel or other external panel of welding power source 102) that drives the welding (or cutting) process/operation. In the case of MIG/MAG welding operations, welding power source 102 provides the weld power from positive terminal 130a to the wire electrode, through feeder 116, cable assembly 108, and torch 110, while the cable assembly 108 also delivers a shielding gas from gas supply 112 to the torch. In the case of TIG or MMA welding, welding power source 102 may supply power from positive terminal 130a to the torch 110 (without a wire electrode feeder), and shielding gas is not required for MMA welding. Return path/cable 115 provides an electrical return path from workpiece 114 to negative terminal 130b of welding power source 102. The aforementioned components comprise a circuit path or weld circuit from positive terminal 130a to negative terminal 130b of welding power source 102, through wire electrode feeder 106 (in the case of GMAW), cable assembly 108, torch 110, workpiece 114, and return path/cable 115.

During a welding operation, an electrode tip 118 of the electrode is brought into contact or near contact with workpiece 114, and the weld power supplied by welding power source 102 to the torch 110 creates an arc between workpiece 114 and electrode tip 118 (also referred to as an "electrode stick") extending through the contact tip 111. To control the welding process, welding power source 102 generates the weld power (e.g., current) at a desired level for the welding process, based on the weld process setting and feedback in the form of measurements of the current and voltage (e.g., arc voltage). The measurements may be produced by current and voltage sense points in welding power source 102 and/or at sense points that are remote from welding power source 102, such as in cable assembly 108 or torch 110.

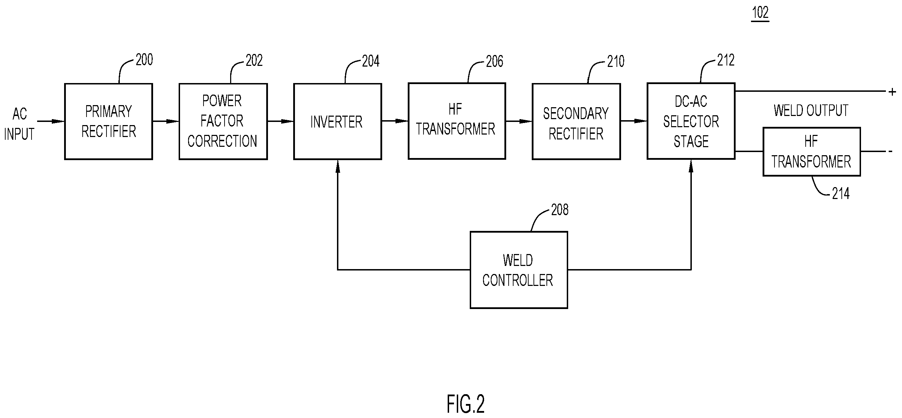

FIG. 2 is a high-level block diagram of an example welding power source 102 capable of delivering both DC and AC weld power for welding operations. Welding power source 102 comprises a primary rectifier 200, such as an AC/DC diode rectifier, that receives AC input power (e.g., from AC mains or a generator) and generates a rectified voltage signal. That is, primary rectifier 200 operates as an AC/DC converter. A boost Power Factor Correction (PFC) circuit 202 regulates and boosts the rectified voltage signal supplied by the primary rectifier 200 to a higher voltage. The "DC bus" voltage generated by the boost PFC circuit 202 is designed to be a smooth, regulated constant voltage that is supplied to an inverter 204 such as an H-bridge inverter, which creates a high-frequency (HF) AC signal as an input to an HF transformer 206. A weld controller 208 controls the inverter 204, e.g., via pulse width modulation, to control the output welding power during a welding process according to the requirements of the welding process.

In particular, inverter 204 comprises a set of high-speed semiconductor switching devices (i.e., power switches) that are pulse width modulated (i.e., switched on and off at a switching frequency) responsive to pulse width modulation (PWM) signals generated by weld controller 208 and applied to control terminals of the switching devices to convert the DC bus voltage to an AC (power) signal or waveform including a voltage and a primary current I_{L} that flows into HF transformer 206. Such operation is referred to as "PWM operation" of inverter 204. Inverter 204 may include a four-quadrant inverter, such as an H-bridge inverter, for example. In other examples, other types of inverters may be employed. Example switching frequencies may be in a range from 1 kHz-100 kHz, although other switching frequencies above and below this range may be used, and for the inverter and the transformer, the term "high-frequency" encompasses this frequency range. Inverter 204 supplies the AC signal to HF transformer 206. HF transformer 206 transforms the voltage and current characteristics of the AC signal from inverter 204 to a transformed AC signal having desired levels of a voltage and a secondary current I_{S} for the welding operation, and supplies the transformed AC signal to secondary rectifier 210. For example, the power upstream of HF transformer 206 (on the primary side) has a relative high voltage and low current, and the power downstream of HF transformer 206 (on the secondary side) has a relatively low voltage and high current. According to one non-limiting example, the primary-to-secondary winding ratio (N1:N2,N3) of HF transformer 206 can be 18:4,4. Secondary rectifier 210 rectifies the transformed AC signal to produce DC weld power and, for DC welding operations, supplies the same to the weld output to downstream welding or plasma cutting equipment (e.g., a wire feeder, a welding gun or torch, a plasma torch, etc.).

The welding power source of FIG. 2 also includes a DC-AC selector stage 212 between the secondary rectifier 210 and the weld output. According to one example, DC-AC selector stage 212 includes a set of switches, such as insulated-gate bipolar transistor (IGBT) switches, capable of being switched at a desired AC frequency to operate as an AC power stage having a DC/AC converter that generates AC weld power. The frequency of the AC weld power can be selected based on the weld requirements. For example, the frequency of the AC weld power can be set in the range from 25 Hz to 500 Hz, though the AC frequency generated by the DC-AC selector stage 212 is not limited to any particular frequency. When AC weld power is required from the welding power source (e.g., during AC TIG welding operations), the weld controller 208 controls DC-AC selector stage 212 to operate in an AC weld power mode by controlling the IGBT switches of the DC-AC selector stage 212 to generate AC weld power to be supplied to the weld output of the welding power source 102. At other times, when DC power is required by the welding operation, the weld controller 208 controls the DC-AC selector stage 212 to operate in a DC weld power mode to pass the DC power signal from the secondary rectifier 210 to the weld output, as described in greater detail below. While the described example employs IGBT switches, other types of semiconductor switches or other switches can be used to generate an AC signal in a similar manner.

The example welding power source of FIG. 2 may include a high-frequency (HF) transformer 214 between the DC-AC selector stage 212 and the negative output power terminal of the welding power source. According to one non-limiting example, HF transformer 214 can have a primary-to-secondary winding ratio (N1:N2) of 15:1 with the primary side being connected between the DC-AC selector circuit and the negative output power terminal. HF transformer 214 applies a high-frequency AC signal to the output weld power to establish the welding arc during TIG welding arc ignition. The techniques and circuitry described herein are not limited to the particular welding power source architecture example of FIG. 2. For example, the voltage supplied to the inverter could be an unregulated voltage. According to another example, the welding power source may include additional stages and circuitry, such as a precharge circuit between the primary rectifier and the PFC circuit.

AC weld power is useful for welding aluminum and magnesium, e.g., with AC TIG welding, which takes advantage of the positive voltage, and hence primary heating location, rapidly fluctuating between the electrode and the workpiece. DC weld power typically experiences a significant voltage drop where longer power cables are required between the welding power source and the welding torch. AC weld power is less susceptible to such voltage drops over long cables; thus, both TIG and MMA (stick) welding operations can benefit from AC welding power when longer power cables are required. AC weld power may also create a more stable arc when welding metals prone to magnetic fields by preventing arc blow and arc deflection.

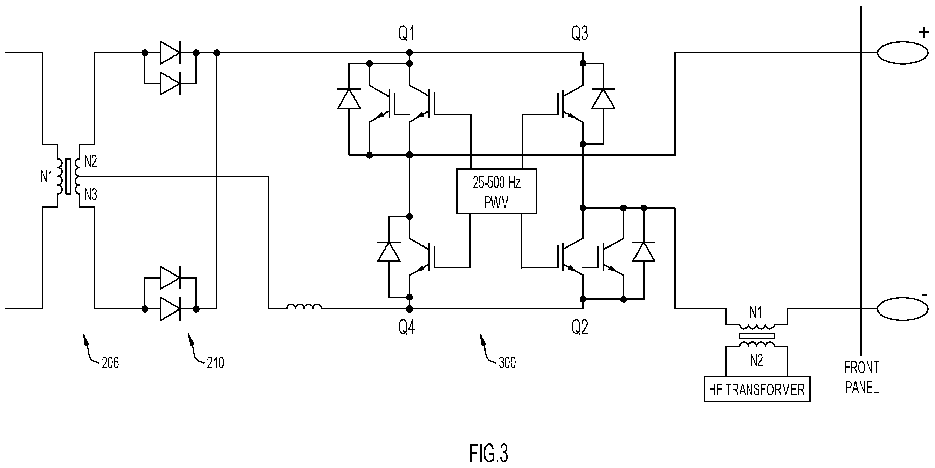

FIG. 3 is one example implementation of the DC-AC selector stage shown in FIG. 2. In this example, the HF transformer 206 has on its secondary side (output side) a center tap and first and second end taps. The first and second end taps are supplied to secondary rectifier 210, which comprises four diodes arranged as a full-wave rectifier to generate a rectified, DC output voltage that is supplied to a DC-AC selector stage 300 on a first "DC positive" voltage line. The center tap of HF transformer 206 is supplied to the DC-AC selector stage 300 on a second "DC negative" voltage line via an inductor. DC-AC selector stage 300 comprises four switch elements Q1, Q2, Q3, and Q4 arranged as an H-bridge (full-bridge) inverter. Each switch element Q1-Q4 includes a switch that can be implemented, for example, with an insulated-gate bipolar transistor (IGBT). During AC welding operation, by selectively controlling the gates of the IBGTs with periodic (e.g., pulse width modulated) signals (e.g., at a frequency between about 25-500 Hz), weld controller 208 can selectively toggle the switches of switch elements Q1-Q4 on and off to generate AC output power, such that DC-AC selector stage 300 functions as an AC power stage with switch elements Q1-Q4 operating as a full-bridge inverter performing DC/AC conversion. During DC operations such as for MIG/MAG, DC MMA, DC TIG, etc., weld controller 208 keeps the switches of switch elements Q1 and Q2 continuously in an on state (passing current) and keeps the switches of switch elements Q3 and Q4 continuously in an off state (open circuit) to allow the DC signal from the secondary rectifier 210 to pass through the DC-AC selector stage 300 to the weld output.

More specifically, switch element Q1 comprises two IGBTs and a diode, all arranged in parallel with each other. The collectors of the two IGBTs are connected to the rectified output of secondary rectifier 210 on the first voltage line, and the emitters of the two IGBTs are connected to the positive weld output terminal, e.g., on the front panel of the welding power source. The positive terminal of the diode of switch element Q1 is connected to the collectors of the two IGBTs at the first voltage line, and the negative terminal of the diode is connected to the emitters of the two IGBTs at the positive weld output terminal.

Switch element Q2 likewise comprises two IGBTs and a diode, all arranged in parallel with each other. The collectors of the two IGBTs and the positive terminal of the diode of the switch element Q2 are connected to the negative weld output terminal, e.g., on the front panel of the welding power source. The emitters of the two IGBTs and the negative terminal of the diode of switch element Q2 are connected to the center tap of the secondary output of HF transformer 206 via an inductor on the second voltage line.

Switch element Q3 comprises an IGBT arranged in parallel with a diode. The collector of the IGBT and the positive terminal of the diode of switch element Q3 are connected to the rectified output of the secondary rectifier on the first voltage line, and the emitter of the IGBT and the negative terminal of the diode of switch element Q3 are connected to the negative weld output terminal. Switch element Q4 comprises an IGBT arranged in parallel with a diode. The collector of the IGBT and the positive terminal of the diode of switch element Q4 are connected to the positive weld output terminal, and the emitter of the IGBT and the negative terminal of the diode of switch element Q4 are connected to the center tap of the secondary output of HF transformer 206 via the inductor on the second voltage line.

Since switch elements Q1 and Q2 are continuously on during DC operations to pass the DC power signal from secondary rectifier 210 to the weld output, switch element Q1 and Q2 each have two IGBTs arranged in parallel to handle the higher DC currents that flow through switch element Q1 and Q2. In contrast, switch elements Q3 and Q4 are maintained in an off state during DC operations and consequently require only a single IGBT to handle current flow during AC operation. In the arrangement shown in FIG. 3, because the output current passes through the IGBTs of switch elements Q1 and Q2 during DC welding operations, significant power loss occurs, thereby diminishing the efficiency of the welding power source.

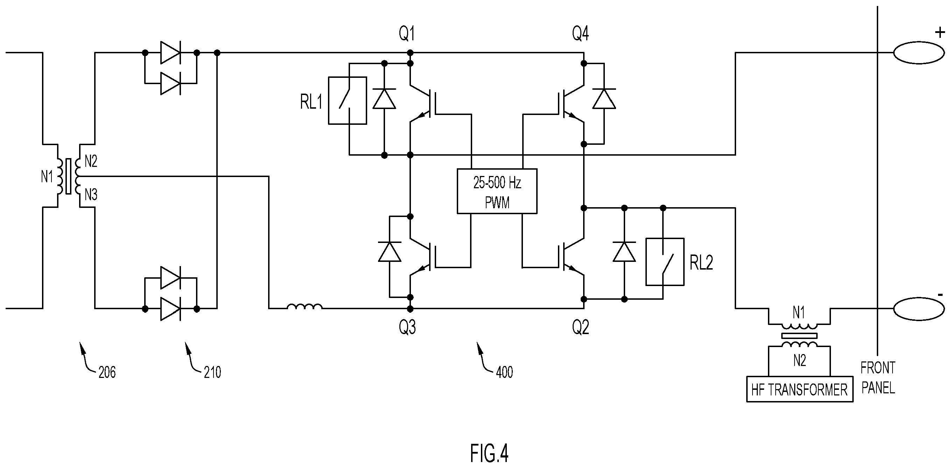

FIG. 4 shows another example implementation of a DC-AC selector stage 400 in the welding power source shown in FIG. 2 for a welding power source, which avoids the significant power losses that occur during DC welding operations from the DC-AC selector stage 300 shown in FIG. 3. As with the example shown in FIG. 3, the secondary output of HF transformer 206 has a center tap and two end taps. The two end taps are supplied to secondary rectifier 210, which comprises four diodes arranged as a full-wave rectifier to generate a rectified, DC output voltage that is supplied to the DC-AC selector stage 400 on a first "DC positive" voltage line. The center tap of the secondary of the HF transformer is supplied to the DC-AC selector stage 400 on a second "DC negative" voltage line via an inductor.

Like the DC-AC selector stage 300 shown in FIG. 3, the DC-AC selector stage 400 shown in FIG. 4 comprises four switch elements Q1, Q2, Q3, and Q4 arranged in an H-bridge (full-bridge) inverter topology. Each switch element Q1-Q4 includes a switch that can be implemented, for example, with an insulated-gate bipolar transistor (IGBT) or with some other types of semiconductor switch or other type of switch. During AC welding operation, by selectively controlling the gates of the IBGTs with periodic (e.g., pulse width modulated) signals (e.g., at 25-500 Hz), weld controller 208 can selectively toggle the switches of switch elements Q1-Q4 on and off to generate AC output power, such that DC-AC selector stage 400 functions as an AC power stage with switch elements Q1-Q4 operating as a full-bridge inverter performing DC/AC conversion. In the implementation shown in FIG. 4, switch elements Q1 and Q2 each include a bypass, high-current relay in parallel with the IGBT of the switch, and only one IGBT is required in each of the switch elements, i.e., the switch of switch element Q1 is the sole switch of switch element Q1 and the switch of switch element Q2 is the sole switch of switch element Q2.

More specifically, switch element Q1 comprises an IGBT, a diode, and a high-current relay RL1 all arranged in parallel with each other. The collector of the IGBT, the positive terminal of the diode, and one end of the relay RL1 of switch element Q1 are connected to the rectified output of the secondary rectifier on the first voltage line. The emitter of the IGBT, the negative terminal of the diode, and the other end of the relay RL1 are connected to the positive terminal of the weld output on the output panel of the welding power source.

Switch element Q2 likewise comprises an IGBT, a diode, and a high-current relay RL2 all arranged in parallel with each other. The collector of the IGBT, the positive terminal of the diode, and one end of the relay RL2 of switch element Q2 are connected to the negative weld output terminal, e.g., on the front panel of the welding power source. The emitter of the IGBT, the negative terminal of the diode, and the other end of the relay RL2 of switch element Q2 are connected to the center tap of the HF transformer 206 secondary output via an inductor on the second voltage line.

Switch element Q3 comprises an IGBT arranged in parallel with a diode. The collector of the IGBT and the positive terminal of the diode of switch element Q3 are connected to the rectified output of secondary rectifier 210 on the first voltage line, and the emitter of the IGBT and the negative terminal of the diode of switch element Q3 are connected to the negative weld output terminal. Switch element Q4 comprises an IGBT arranged in parallel with a diode. The collector of the IGBT and the positive terminal of the diode of switch element Q4 are connected to the positive weld output terminal, and the emitter of the IGBT and the negative terminal of the diode of switch element Q4 are connected to the center tap of the secondary output of HF transformer 206 via the second voltage line.

During DC operations such as for MIG/MAG, DC MMA, DC TIG, etc., weld controller 208 keeps the switches (e.g., IGBTs) of switch elements Q1 and Q2 continuously in an on state (passing current) and keeps the relays RL1 and RL2 continuously on (closed), while keeping the switches of switch elements Q3 and Q4 continuously in an off state (open circuit). This configuration allows DC power from the secondary rectifier to pass through the DC-AC selector stage 400 to the weld output with a reduced power loss. Specifically, because relays RL1 and RL2 have a lower resistance than the IGBTs, the parallel arrangement of the relays and IGBTs causes the majority of the current to flow through the relays and only a small fraction of the current to flow through the IGBTs. Thus, most of the DC weld current is rerouted through the relays and largely bypasses the IGBTs of switch elements Q1 and Q2, thereby reducing the conduction losses of the IGBTs. This arrangement not only eliminates the need for the second IGBT in each of the switches Q1 and Q2 to handle the high DC current, but also reduces the power loss by an order of magnitude (e.g., approximately one-tenth of the power loss) relative to the implementation shown in FIG. 3.

During AG power operation of DC-AC selector stage 400 shown in FIG. 4, switch elements Q1-Q4 operate as a full-bridge inverter at the desired frequency under the control of weld controller 208 to provide an AC weld power output, and relays RL1 and RL2 remain continuously off (open state). By selectively controlling the gates of the IBGTs with pulse width modulated signals (e.g., at 25-500 Hz), the weld controller can selectively switch switches Q1-Q4 on and off to generate AC weld power at the weld output, thereby operating as an AC power stage performing DC/AC conversion.

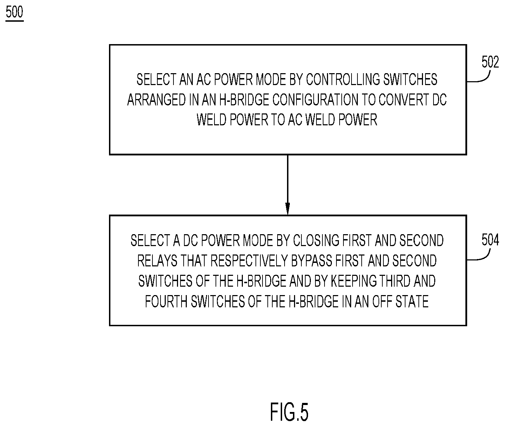

FIG. 5 is a flowchart of example operations 500 of a method employed by welding power source 102 to implement an AC welding mode and a DC welding mode by controlling the switches and relays of DC-AC selector stage 400 via weld controller 208. During operations 500, welding power source 102 supplies a voltage to contact tip 111/electrode tip 118 of torch 110 under control of weld controller 208.

At 502, weld controller 208 controls DC-AC selector stage 400 to selects the AC power mode by controlling the first, second, third, and fourth switches of DC-AC selector stage 400, which are arranged in an H-bridge configuration, to convert the input DC weld power from the secondary rectifier to AC weld power. Specifically, by switching the switches on and off, the H-bridge switch arrangement operates as a full-bridge inverter to produce the AC weld power at the switching frequency, as previously described. During the AC power mode, the first and second relays of DC-AC selector stage 400 are kept continuously in an open state (open circuit) to prevent current from flowing through the relays. The AC weld power at the output power terminals of the welding power source during the AC power mode can be supplied to a welding torch operating in an AC power mode, such as a TIG welding torch or an MMA welding torch.

At 504, weld controller 208 controls DC-AC selector stage 400 to select the DC power mode by closing the first and second relays of DC-AC selector stage 400, thereby bypassing the first and second switches, respectively. Weld controller 208 also keeps the third and fourth switches of DC-AC selector stage 400 in an off state, such that the input DC weld power flows from the input to the output of DC-AC selector stage 400 via the first and second relays. Weld controller 208 can also keep the first and second switches of DC-AC selector stage 400, which are in parallel with the first and second relays, respectively, in an on state during the DC power mode, such that some portion of the input DC weld power can flow through the first and second switches in parallel with the first and second relays. The DC weld power at the output power terminals of the welding power source during the DC power mode can be supplied to a welding torch operating in a DC power mode, such as a MIG/MAG welding torch, a TIG welding torch, or an MMA welding torch.

In some aspects, the techniques described herein relate to a welding power source comprising: a primary rectifier to converter alternating-current (AC) input power to direct-current (DC) power; an inverter to convert the DC power to an AC signal; a transformer to transform the AC signal to a transformed AC signal having different voltage and current characteristics than the AC signal; a secondary rectifier to rectify the transformed AC signal to generate DC weld power; a DC-AC selector stage to receive the DC weld power and configurable in a DC power mode and in an AC power mode, the DC-AC selector stage comprising a first switch element including a first switch and a first relay arranged in parallel and a second switch element including a second switch and a second relay arranged in parallel; and a weld controller to control the first and second switches and the first and second relays to select the DC power mode in which the DC weld power passes through the DC-AC selector stage to first and second output power terminals of the welding power source and to select the AC power mode in which the DC weld power is converted to AC weld power by the DC-AC selector stage and supplied to the first and second output power terminals.

In some aspects, the techniques described herein relate to a welding power source wherein, during the DC power mode, the weld controller is operable to keep the first and second relays closed to bypass the first and second switches and, during the AC power mode, the weld controller is operable to keep the first and second relays open.

In some aspects, the techniques described herein relate to a welding power source wherein, during the DC power mode, the weld controller is operable to keep the first and second switches on and, during the AC power mode, the controller is operable to switch the first and second switches on and off to convert the DC weld power to the AC weld power.

In some aspects, the techniques described herein relate to a welding power source wherein: the transformer has on its secondary side first and second end taps and a center tap; the secondary rectifier receives transformer output signals from the first and second end taps and supplies the DC weld power to the DC-AC selector stage on a first voltage line; and the DC-AC selector stage is connected to the center tap of the transformer via a second voltage line.

In some aspects, the techniques described herein relate to a welding power source wherein: the first relay and the first switch are between the first voltage line and the first output power terminal; and the second relay and the second switch are between the second voltage line and the second output power terminal.

In some aspects, the techniques described herein relate to a welding power source wherein: the DC-AC selector stage further comprises a third switch element including a third switch and a fourth switch element comprising a fourth switch; the third switch is between the first voltage line and the second output power terminal; and the fourth switch is between the second voltage line and the first output power terminal.

In some aspects, the techniques described herein relate to a welding power source wherein: during the DC power mode, the weld controller is operable to keep the first and second relays closed and the third and fourth switches in an off state; and during the AC power mode, the controller is operable to keep the first and second relays open and to switch the first, second, third, and fourth switches on and off to convert the DC weld power to AC weld power.

In some aspects, the techniques described herein relate to a welding power source wherein, during the DC power mode, the weld controller is operable to keep the first and second switches in an on state.

In some aspects, the techniques described herein relate to a welding power source wherein the DC-AC selector stage further comprises a third switch element including a third switch and a fourth switch element comprising a fourth switch, the first, second, third, and fourth switch elements being arranged as an H-bridge.

In some aspects, the techniques described herein relate to a welding power source wherein the weld controller is operable to control the DC-AC selector stage as a full-bridge inverter during the AC power mode.

In some aspects, the techniques described herein relate to a welding power source wherein the first switch element further comprises a first diode arranged in parallel with the first switch and the first relay, and the second switch element further comprises a second diode arranged in parallel with the second switch and the second relay.

In some aspects, the techniques described herein relate to a welding power source wherein the first and second switches comprise insulated-gate bipolar transistor (IGBT) switches.

In some aspects, the techniques described herein relate to a welding power source wherein the first switch is a sole switch of the first switch element, and the second switch is a sole switch of the second switch element.

In some aspects, the techniques described herein relate to a welding power source wherein the secondary rectifier is a full-bridge rectifier comprising four diodes.

In some aspects, the techniques described herein relate to a welding system comprising: the aforementioned welding power source; a cable assembly; and a TIG welding torch to receive weld power from the welding power source via the cable assembly, wherein: the welding system is operable in a DC TIG welding mode in which the welding power source supplies the DC weld power to the TIG welding torch, and the welding system is operable in an AC TIG welding mode in which the welding power source supplies the AC weld power to the TIG welding torch.

In some aspects, the techniques described herein relate to a DC-AC selector stage for a welding power source, comprising: a first switch element comprising a first relay and a first switch arranged in parallel between an output of a secondary rectifier downstream of a transformer and a first output power terminal of the welding power source; a second switch element comprising a second relay and a second switch arranged in parallel between a center tap of the transformer and a second output power terminal of the welding power source; a third switch element comprising a third switch between the output of the secondary rectifier and the second output power terminal; and a fourth switch element comprising a fourth switch between the center tap of the transformer and the first output power terminal, wherein: the DC-AC selector stage is operable in an AC power mode in which the first and second relays are in an open state and the first, second, third, and fourth switches are operated as an H-bridge inverter to convert DC power to AC weld power; and the DC-AC selector stage is operable in a DC power mode in which the first and second relays are in a closed state and the third and fourth switches are in an off state to pass DC weld power to the first and second weld output terminals of the welding power source.

In some aspects, the techniques described herein relate to a DC-AC selector stage, wherein the first, second, third, and fourth switch elements are operable as a full-bridge inverter in the AC power mode.

In some aspects, the techniques described herein relate to a method of controlling a welding power source, comprising: selecting an AC power mode by controlling first, second, third, and fourth switches arranged in an H-bridge configuration to convert DC weld power to AC weld power; and selecting a DC power mode by closing first and second relays that respectively bypass the first and second switches and by keeping the third and fourth switches in an off state.

In some aspects, the techniques described herein relate to a method wherein selecting the DC power mode further includes keeping the first and second switches in an on state.

In some aspects, the techniques described herein relate to a method further comprising: supplying the AC weld power to a TIG welding torch during the AC power mode; and supplying the DC weld power to the TIG welding torch during the DC power mode.

The descriptions of the various implementations have been presented for purposes of illustration but are not intended to be exhaustive or limited to the implementations disclosed. Many modifications and variations will be apparent to those of ordinary skill in the art without departing from the scope of the present invention as defined in the appended claims.

## Claims

1. A welding power source (102) comprising:
a primary rectifier (200) to converter alternating-current (AC) input power to direct-current (DC) power;
an inverter (204) to convert the DC power to an AC signal;
a transformer (206) to transform the AC signal to a transformed AC signal having different voltage and current characteristics than the AC signal;
a secondary rectifier (210) to rectify the transformed AC signal to generate DC weld power;
the welding power source (102) being **characterised by**:
a DC-AC selector stage (400) to receive the DC weld power and configurable in a DC power mode and in an AC power mode, the DC-AC selector stage (400) comprising a first switch element (Q1) including a first switch and a first relay (RL1) arranged in parallel and a second switch element (Q2) including a second switch and a second relay (RL2) arranged in parallel; and
a weld controller (208) to control the first and second switches and the first and second relays (RL1, RL2) to select the DC power mode in which the DC weld power passes through the DC-AC selector stage (400) to first and second output power terminals (130a, 130b) of the welding power source (102) and to select the AC power mode in which the DC weld power is converted to AC weld power by the DC-AC selector stage (400) and supplied to the first and second output power terminals (130a, 130b).

2. The welding power source (102) of claim 1, wherein:
during the DC power mode, the weld controller (208) is operable to keep the first and second relays (RL1, RL2) closed to bypass the first and second switches; and
during the AC power mode, the weld controller (208) is operable to keep the first and second relays (RL1, RL2) open.

3. The weld power source of claim 1, wherein:
during the DC power mode, the weld controller (208) is operable to keep the first and second switches on; and
during the AC power mode, the controller is operable to switch the first and second switches on and off to convert the DC weld power to the AC weld power.

4. The welding power source (102) of claim 1, wherein:
the transformer (206) has on its secondary side first and second end taps and a center tap;
the secondary rectifier (210) receives transformer output signals from the first and second end taps and supplies the DC weld power to the DC-AC selector stage (400) on a first voltage line; and
the DC-AC selector stage (400) is connected to the center tap of the transformer (206) via a second voltage line.

5. The welding power source (102) of claim 4, wherein:
the first relay (RL1) and the first switch are between the first voltage line and the first output power terminal (130a); and
the second relay (RL2) and the second switch are between the second voltage line and the second output power terminal (130b).

6. The welding power source (102) of claim 4, wherein:
the DC-AC selector stage (400) further comprises a third switch element (Q3) including a third switch and a fourth switch element (Q4) comprising a fourth switch;
the third switch is between the first voltage line and the second output power terminal (130b); and
the fourth switch is between the second voltage line and the first output power terminal (130a).

7. The welding power source (102) of claim 6, wherein:
during the DC power mode, the weld controller (208) is operable to keep the first and second relays (RL1, RL2) closed and the third and fourth switches in an off state; and
during the AC power mode, the controller is operable to keep the first and second relays (RL1, RL2) open and to switch the first, second, third, and fourth switches on and off to convert the DC weld power to AC weld power.

8. The welding power source (102) of claim 1, wherein the DC-AC selector stage (400) further comprises a third switch element (Q3) including a third switch and a fourth switch element (Q4) comprising a fourth switch, the first, second, third, and fourth switch elements (Q1, Q2, Q3, Q4) being arranged as an H-bridge, wherein the weld controller (208) is operable to control the DC-AC selector stage (400) as a full-bridge inverter during the AC power mode.

9. The welding power source (102) of claim 1, wherein the first switch is a sole switch of the first switch element (Q1), and the second switch is a sole switch of the second switch element (Q2).

10. The welding power source (102) of claim 1, wherein the secondary rectifier (210) is a full-bridge rectifier comprising four diodes.

11. A welding system (100) comprising:
the welding power source (102) of claim 1;
a cable assembly (108); and
a TIG welding torch (110) to receive weld power from the welding power source (102) via the cable assembly (108), wherein:
the welding system (100) is operable in a DC TIG welding mode in which the welding power source (102) supplies the DC weld power to the TIG welding torch (110), and
the welding system (100) is operable in an AC TIG welding mode in which the welding power source (102) supplies the AC weld power to the TIG welding torch (110).

12. A DC-AC selector stage (400) for a welding power source (102), comprising:
a first switch element (Q1) comprising a first relay (RL1) and a first switch arranged in parallel between an output of a secondary rectifier (210) downstream of a transformer (206) and a first output power terminal (130a) of the welding power source (102);
a second switch element (Q2) comprising a second relay (RL2) and a second switch arranged in parallel between a center tap of the transformer (206) and a second output power terminal (130b) of the welding power source (102);
a third switch element (Q3) comprising a third switch between the output of the secondary rectifier (210) and the second output power terminal (130b); and
a fourth switch element (Q4) comprising a fourth switch between the center tap of the transformer (206) and the first output power terminal (130a), wherein:
the DC-AC selector stage (400) is configured to be operable in an AC power mode in which the first and second relays (RL1, RL2) are in an open state and the first, second, third, and fourth switches are operated as an H-bridge inverter to convert DC power to AC weld power; and
the DC-AC selector stage (400) is configured to be operable in a DC power mode in which the first and second relays (RL1, RL2) are in a closed state and the third and fourth switches are in an off state to pass DC weld power to the first and second weld output terminals (130a, 130b) of the welding power source (102).

13. The DC-AC selector stage (400) of claim 12, wherein the first, second, third, and fourth switch elements (Q1, Q2, Q3, Q4) are operable as a full-bridge inverter in the AC power mode.

14. A method of controlling a welding power source (102), comprising:
selecting an AC power mode by controlling first, second, third, and fourth switches arranged in an H-bridge configuration to convert DC weld power to AC weld power;
the method being **characterised by**:
selecting a DC power mode by closing first and second relays (RL1, RL2) that respectively bypass the first and second switches and by keeping the third and fourth switches in an off state.

15. The method of claim 14, further comprising:
supplying the AC weld power to a TIG welding torch (110) during the AC power mode; and
supplying the DC weld power to the TIG welding torch (110) during the DC power mode.

## Patentansprüche

1. Eine Schweißstromquelle (102), die Folgendes beinhaltet:
einen Primärgleichrichter (200) zum Umwandeln von Wechselstrom(AC)-Eingangsstrom in Gleichstrom(DC)-Strom;
einen Wechselrichter (204) zum Umwandeln des DC-Stroms in ein AC-Signal;
einen Transformator (206) zum Transformieren des AC-Signals in ein transformiertes AC-Signal mit anderen Spannungs- und Stromeigenschaften als das AC-Signal;
einen Sekundärgleichrichter (210) zum Gleichrichten des transformierten AC-Signals, um DC-Schweißstrom zu erzeugen;
wobei die Schweißstromquelle (102) durch Folgendes gekennzeichnet ist:
eine DC-AC-Auswahlstufe (400) zum Empfangen des DC-Schweißstroms und die in einen DC-Strommodus und in einen AC-Strommodus konfiguriert werden kann, wobei die DC-AC-Auswahlstufe (400) ein erstes Schaltelement (Q1), das einen ersten Schalter und ein erstes Relais (RL1), die parallel angeordnet sind, umfasst, und ein zweites Schaltelement (Q2), das einen zweiten Schalter und ein zweites Relais (RL2), die parallel angeordnet sind, umfasst, beinhaltet; und
eine Schweißsteuerung (208) zum Steuern des ersten und des zweiten Schalters und des ersten und des zweiten Relais (RL1, RL2) zum Auswählen des DC-Strommodus, in dem der DC-Schweißstrom durch die DC-AC-Auswahlstufe (400) zu einem ersten und einem zweiten Ausgangsstromanschluss (130a, 130b) der Schweißstromquelle (102) geleitet wird, und zum Auswählen des AC-Strommodus, in dem der DC-Schweißstrom durch die DC-AC-Auswahlstufe (400) in AC-Schweißstrom umgewandelt und dem ersten und dem zweiten Ausgangsstromanschluss (130a, 130b) zugeführt wird.

2. Schweißstromquelle (102) gemäß Anspruch 1, wobei:
während des DC-Strommodus die Schweißsteuerung (208) betriebsfähig ist, um das erste und das zweite Relais (RL1, RL2) geschlossen zu halten, um den ersten und den zweiten Schalter zu überbrücken; und
während des AC-Strommodus die Schweißsteuerung (208) betriebsfähig ist, um das erste und das zweite Relais (RL1, RL2) geöffnet zu halten.

3. Schweißstromquelle gemäß Anspruch 1, wobei:
während des DC-Strommodus die Schweißsteuerung (208) betriebsfähig ist, um den ersten und den zweiten Schalter eingeschaltet zu halten; und
während des AC-Strommodus die Steuerung betriebsfähig ist, um den ersten und den zweiten Schalter ein- und auszuschalten, um den DC-Schweißstrom in den AC-Schweißstrom umzuwandeln.

4. Schweißstromquelle (102) gemäß Anspruch 1, wobei:
der Transformator (206) auf seiner Sekundärseite eine erste und eine zweite Endanzapfung und eine mittlere Anzapfung aufweist;
der Sekundärgleichrichter (210) von der ersten und der zweiten Endanzapfung Transformatorausgangssignale empfängt und der DC-AC-Auswahlstufe (400) auf einer ersten Spannungsleitung den DC-Schweißstrom zuführt; und
die DC-AC-Auswahlstufe (400) über eine zweite Spannungsleitung mit der mittleren Anzapfung des Transformators (206) verbunden ist.

5. Schweißstromquelle (102) gemäß Anspruch 4, wobei:
das erste Relais (RL1) und der erste Schalter sich zwischen der ersten Spannungsleitung und dem ersten Ausgangsstromanschluss (130a) befinden; und
das zweite Relais (RL2) und der zweite Schalter sich zwischen der zweiten Spannungsleitung und dem zweiten Ausgangsstromanschluss (130b) befinden.

6. Schweißstromquelle (102) gemäß Anspruch 4, wobei:
die DC-AC-Auswahlstufe (400) ferner ein drittes Schaltelement (Q3), das einen dritten Schalter umfasst, und ein viertes Schaltelement (Q4), das einen vierten Schalter beinhaltet, beinhaltet;
der dritte Schalter sich zwischen der ersten Spannungsleitung und dem zweiten Ausgangsstromanschluss (130b) befindet; und
der vierte Schalter sich zwischen der zweiten Spannungsleitung und dem ersten Ausgangsstromanschluss (130a) befindet.

7. Schweißstromquelle (102) gemäß Anspruch 6, wobei:
während des DC-Strommodus die Schweißsteuerung (208) betriebsfähig ist, um das erste und das zweite Relais (RL1, RL2) geschlossen und den dritten und den vierten Schalter in einem Aus-Zustand zu halten; und
während des AC-Strommodus die Steuerung betriebsfähig ist, um das erste und das zweite Relais (RL1, RL2) geöffnet zu halten und den ersten, den zweiten, den dritten und den vierten Schalter ein- und auszuschalten, um den DC-Schweißstrom in AC-Schweißstrom umzuwandeln.

8. Schweißstromquelle (102) gemäß Anspruch 1, wobei die DC-AC-Auswahlstufe (400) ferner ein drittes Schaltelement (Q3), das einen dritten Schalter umfasst, und ein viertes Schaltelement (Q4), das einen vierten Schalter beinhaltet, beinhaltet, wobei das erste, das zweite, das dritte und das vierte Schaltelement (Q1, Q2, Q3, Q4) als eine H-Brücke angeordnet sind, wobei die Schweißsteuerung (208) betriebsfähig ist, um die DC-AC-Auswahlstufe (400) während des AC-Strommodus als einen Vollbrücken-Wechselrichter zu steuern.

9. Schweißstromquelle (102) gemäß Anspruch 1, wobei der erste Schalter ein alleiniger Schalter des ersten Schaltelements (Q1) ist und der zweite Schalter ein alleiniger Schalter des zweiten Schaltelements (Q2) ist.

10. Schweißstromquelle (102) gemäß Anspruch 1, wobei der Sekundärgleichrichter (210) ein Vollbrücken-Gleichrichter ist, der vier Dioden beinhaltet.

11. Ein Schweißsystem (100), das Folgendes beinhaltet:
die Schweißstromquelle (102) gemäß Anspruch 1;
eine Kabelanordnung (108); und
einen WIG-Schweißbrenner (110) zum Empfangen von Schweißstrom von der Schweißstromquelle (102) über die Kabelanordnung (108), wobei:
das Schweißsystem (100) in einem DC-WIG-Schweißmodus betriebsfähig ist, in dem die Schweißstromquelle (102) dem WIG-Schweißbrenner (110) den DC-Schweißstrom zuführt, und
das Schweißsystem (100) in einem AC-WIG-Schweißmodus betriebsfähig ist, in dem die Schweißstromquelle (102) dem WIG-Schweißbrenner (110) den AC-Schweißstrom zuführt.

12. Eine DC-AC-Auswahlstufe (400) für eine Schweißstromquelle (102), die Folgendes beinhaltet:
ein erstes Schaltelement (Q1), das ein erstes Relais (RL1) und einen ersten Schalter, die zwischen einem Ausgang eines Sekundärgleichrichters (210), der einem Transformator (206) nachgeschaltet ist, und einem ersten Ausgangsstromanschluss (130a) der Schweißstromquelle (102) parallel angeordnet sind, beinhaltet;
ein zweites Schaltelement (Q2), das ein zweites Relais (RL2) und einen zweiten Schalter, die zwischen einer mittleren Anzapfung des Transformators (206) und einem zweiten Ausgangsstromanschluss (130b) der Schweißstromquelle (102) parallel angeordnet sind, beinhaltet;
ein drittes Schaltelement (Q3), das einen dritten Schalter zwischen dem Ausgang des Sekundärgleichrichters (210) und dem zweiten Ausgangsstromanschluss (130b) beinhaltet; und
ein viertes Schaltelement (Q4), das einen vierten Schalter zwischen der mittleren Anzapfung des Transformators (206) und dem ersten Ausgangsstromanschluss (130a) beinhaltet, wobei:
die DC-AC-Auswahlstufe (400) dazu konfiguriert ist, in einem AC-Strommodus betriebsfähig zu sein, in dem das erste und das zweite Relais (RL1, RL2) in einem geöffneten Zustand sind und der erste, der zweite, der dritte und der vierte Schalter als ein H-Brücken-Wechselrichter betrieben werden, um DC-Strom in AC-Schweißstrom umzuwandeln; und
die DC-AC-Auswahlstufe (400) dazu konfiguriert ist, in einem DC-Strommodus betriebsfähig zu sein, in dem das erste und das zweite Relais (RL1, RL2) in einem geschlossenen Zustand sind und der dritte und der vierte Schalter in einem Aus-Zustand sind, um DC-Schweißstrom zu dem ersten und dem zweiten Schweißausgangsanschluss (130a, 130b) der Schweißstromquelle (102) zu leiten.

13. DC-AC-Auswahlstufe (400) gemäß Anspruch 12, wobei das erste, das zweite, das dritte und das vierte Schaltelement (Q1, Q2, Q3, Q4) im AC-Strommodus als ein Vollbrücken-Wechselrichter betriebsfähig sind.

14. Ein Verfahren zum Steuern einer Schweißstromquelle (102), das Folgendes beinhaltet:
Auswählen eines AC-Strommodus durch Steuern eines ersten, eines zweiten, eines dritten und eines vierten Schalters, die in einer H-Brücken-Konfiguration angeordnet sind, um DC-Schweißstrom in AC-Schweißstrom umzuwandeln;
wobei das Verfahren durch Folgendes gekennzeichnet ist:
Auswählen eines DC-Strommodus durch Schließen eines ersten und eines zweiten Relais (RL1, RL2), die den ersten bzw. den zweiten Schalter überbrücken, und durch Halten des dritten und des vierten Schalters in einem Aus-Zustand.

15. Verfahren gemäß Anspruch 14, das ferner Folgendes beinhaltet:
Zuführen des AC-Schweißstroms zu einem WIG-Schweißbrenner (110) während des AC-Strommodus; und
Zuführen des DC-Schweißstroms zu dem WIG-Schweißbrenner (110) während des DC-Strommodus.

## Revendications

1. Une source d'alimentation de soudage (102) comprenant :
un redresseur primaire (200) destiné à convertir de la puissance d'entrée en courant alternatif (CA) en puissance en courant continu (CC) ;
un onduleur (204) destiné à convertir la puissance CC en un signal CA ;
un transformateur (206) destiné à transformer le signal CA en un signal CA transformé ayant des caractéristiques de tension et de courant différentes de celles du signal CA ;
un redresseur secondaire (210) destiné à redresser le signal CA transformé afin de générer de la puissance de soudage CC ;
la source d'alimentation de soudage (102) étant **caractérisée par** :
un étage de sélection CC-CA (400) destiné à recevoir la puissance de soudage CC et configurable dans un mode d'alimentation CC et dans un mode d'alimentation CA,
l'étage de sélection CC-CA (400) comprenant un premier élément de commutation (Q1) incluant un premier interrupteur et un premier relais (RL1) montés en parallèle et un deuxième élément de commutation (Q2) incluant un deuxième interrupteur et un deuxième relais (RL2) montés en parallèle ; et
un dispositif de commande de soudage (208) destiné à commander les premier et deuxième interrupteurs et les premier et deuxième relais (RL1, RL2) afin de sélectionner le mode d'alimentation CC dans lequel la puissance de soudage CC passe à travers l'étage de sélection CC-CA (400) jusqu'à des première et deuxième bornes d'alimentation de sortie (130a, 130b) de la source d'alimentation de soudage (102) et afin de sélectionner le mode d'alimentation CA dans lequel la puissance de soudage CC est convertie en puissance de soudage CA par l'étage de sélection CC-CA (400) et fournie aux première et deuxième bornes d'alimentation de sortie (130a, 130b).

2. La source d'alimentation de soudage (102) de la revendication 1, dans laquelle :
durant le mode d'alimentation CC, le dispositif de commande de soudage (208) est utilisable pour maintenir les premier et deuxième relais (RL1, RL2) fermés afin de contourner les premier et deuxième interrupteurs ; et
durant le mode d'alimentation CA, le dispositif de commande de soudage (208) est utilisable pour maintenir les premier et deuxième relais (RL1, RL2) ouverts.

3. La source d'alimentation de soudage de la revendication 1, dans laquelle :
durant le mode d'alimentation CC, le dispositif de commande de soudage (208) est utilisable pour maintenir les premier et deuxième interrupteurs à l'état passant ; et
durant le mode d'alimentation CA, le dispositif de commande est utilisable pour faire passer les premier et deuxième interrupteurs à l'état passant et à l'état non passant afin de convertir la puissance de soudage CC en la puissance de soudage CA.

4. La source d'alimentation de soudage (102) de la revendication 1, dans laquelle :
le transformateur (206) a sur son côté secondaire des première et deuxième prises terminales et une prise centrale ;
le redresseur secondaire (210) reçoit des signaux de sortie de transformateur en provenance des première et deuxième prises terminales et fournit la puissance de soudage CC à l'étage de sélection CC-CA (400) sur une première ligne de tension ; et
l'étage de sélection CC-CA (400) est connecté à la prise centrale du transformateur (206) par l'intermédiaire d'une deuxième ligne de tension.

5. La source d'alimentation de soudage (102) de la revendication 4, dans laquelle :
le premier relais (RL1) et le premier interrupteur sont situés entre la première ligne de tension et la première borne d'alimentation de sortie (130a) ; et
le deuxième relais (RL2) et le deuxième interrupteur sont situés entre la deuxième ligne de tension et la deuxième borne d'alimentation de sortie (130b).

6. La source d'alimentation de soudage (102) de la revendication 4, dans laquelle :
l'étage de sélection CC-CA (400) comprend en outre un troisième élément de commutation (Q3) incluant un troisième interrupteur et un quatrième élément de commutation (Q4) comprenant un quatrième interrupteur ;
le troisième interrupteur est situé entre la première ligne de tension et la deuxième borne d'alimentation de sortie (130b) ; et
le quatrième interrupteur est situé entre la deuxième ligne de tension et la première borne d'alimentation de sortie (130a).

7. La source d'alimentation de soudage (102) de la revendication 6, dans laquelle :
durant le mode d'alimentation CC, le dispositif de commande de soudage (208) est utilisable pour maintenir les premier et deuxième relais (RL1, RL2) fermés et les troisième et quatrième interrupteurs dans un état non passant ; et
durant le mode d'alimentation CA, le dispositif de commande est utilisable pour maintenir les premier et deuxième relais (RL1, RL2) ouverts et pour faire passer les premier, deuxième, troisième, et quatrième interrupteurs à l'état passant et à l'état non passant afin de convertir la puissance de soudage CC en puissance de soudage CA.

8. La source d'alimentation de soudage (102) de la revendication 1, dans laquelle l'étage de sélection CC-CA (400) comprend en outre un troisième élément de commutation (Q3) incluant un troisième interrupteur et un quatrième élément de commutation (Q4) comprenant un quatrième interrupteur, les premier, deuxième, troisième, et quatrième éléments de commutation (Q1, Q2, Q3, Q4) étant montés sous la forme d'un pont en H, dans laquelle le dispositif de commande de soudage (208) est utilisable pour commander l'étage de sélection CC-CA (400) comme un onduleur en pont complet durant le mode d'alimentation CA.

9. La source d'alimentation de soudage (102) de la revendication 1, dans laquelle le premier interrupteur est un unique interrupteur du premier élément de commutation (Q1), et le deuxième interrupteur est un unique interrupteur du deuxième élément de commutation (Q2).

10. La source d'alimentation de soudage (102) de la revendication 1, dans laquelle le redresseur secondaire (210) est un redresseur en pont complet comprenant quatre diodes.

11. Un système de soudage (100) comprenant :
la source d'alimentation de soudage (102) de la revendication 1 ;
un ensemble câble (108) ; et
une torche de soudage TIG (110) destinée à recevoir de la puissance de soudage en provenance de la source d'alimentation de soudage (102) par l'intermédiaire de l'ensemble câble (108),
le système de soudage (100) étant utilisable dans un mode de soudage TIG CC dans lequel la source d'alimentation de soudage (102) fournit la puissance de soudage CC à la torche de soudage TIG (110), et
le système de soudage (100) étant utilisable dans un mode de soudage TIG CA dans lequel la source d'alimentation de soudage (102) fournit la puissance de soudage CA à la torche de soudage TIG (110).

12. Un étage de sélection CC-CA (400) pour une source d'alimentation de soudage (102), comprenant :
un premier élément de commutation (Q1) comprenant un premier relais (RL1) et un premier interrupteur montés en parallèle entre une sortie d'un redresseur secondaire (210) en aval d'un transformateur (206) et une première borne d'alimentation de sortie (130a) de la source d'alimentation de soudage (102) ;
un deuxième élément de commutation (Q2) comprenant un deuxième relais (RL2) et un deuxième interrupteur montés en parallèle entre une prise centrale du transformateur (206) et une deuxième borne d'alimentation de sortie (130b) de la source d'alimentation de soudage (102) ;
un troisième élément de commutation (Q3) comprenant un troisième interrupteur situé entre la sortie du redresseur secondaire (210) et la deuxième borne d'alimentation de sortie (130b) ; et
un quatrième élément de commutation (Q4) comprenant un quatrième interrupteur situé entre la prise centrale du transformateur (206) et la première borne d'alimentation de sortie (130a),
l'étage de sélection CC-CA (400) étant configuré pour être utilisable dans un mode d'alimentation CA dans lequel les premier et deuxième relais (RL1, RL2) sont dans un état ouvert et les premier, deuxième, troisième, et quatrième interrupteurs sont utilisés comme un onduleur en pont en H afin de convertir de la puissance CC en puissance de soudage CA ; et
l'étage de sélection CC-CA (400) étant configuré pour être utilisable dans un mode d'alimentation CC dans lequel les premier et deuxième relais (RL1, RL2) sont dans un état fermé et les troisième et quatrième interrupteurs sont dans un état non passant afin de faire passer de la puissance de soudage CC jusqu'aux première et deuxième bornes de sortie de soudage (130a, 130b) de la source d'alimentation de soudage (102).

13. L'étage de sélection CC-CA (400) de la revendication 12, dans lequel les premier, deuxième, troisième, et quatrième éléments de commutation (Q1, Q2, Q3, Q4) sont utilisables comme un onduleur en pont complet dans le mode d'alimentation CA.

14. Un procédé de commande d'une source d'alimentation de soudage (102), comprenant :
le fait de sélectionner un mode d'alimentation CA par commande de premier,
deuxième, troisième, et quatrième interrupteurs montés dans une configuration en pont en H afin de convertir de la puissance de soudage CC en puissance de soudage CA ;
le procédé étant **caractérisé par** :
le fait de sélectionner un mode d'alimentation CC par fermeture de premier et deuxième relais (RL1, RL2) qui contournent respectivement les premier et deuxième interrupteurs et par maintien des troisième et quatrième interrupteurs dans un état non passant.

15. Le procédé de la revendication 14, comprenant en outre :
le fait de fournir la puissance de soudage CA à une torche de soudage TIG (110) durant le mode d'alimentation CA ; et
le fait de fournir la puissance de soudage CC à la torche de soudage TIG (110) durant le mode d'alimentation CC.
